# EUROPÄISCHE PATENTSCHRIFT

(11) **EP 4 425 829 B1**
(45) Veröffentlichungstag und Bekanntmachung des Hinweises auf die Patenterteilung: **06.05.2026**
(21) Anmeldenummer: 23159643.8
(22) Anmeldetag: 02.03.2023
(51) Int. Cl.: H04L 9/40, H04W 12/08, H04W 12/126, H04W 12/128

(54) **SCHADENSBEGRENZUNG NACH MALWARE-INFEKTION EINES MOBILFUNKFÄHIGEN ENDGERÄTS**
DAMAGE LIMITATION AFTER MALWARE INFECTION OF A MOBILE TERMINAL CAPABLE OF BEING MOBILE
LIMITATION DES DOMMAGES APRÈS UNE INFECTION PAR LOGICIEL MALVEILLANT D'UN TERMINAL MOBILE

(43) Veröffentlichungstag der Anmeldung: 04.09.2024
(73) Patentinhaber: Deutsche Telekom AG, 53113 Bonn (DE)
(72) Erfinder: HABERKORN, Günter, 92262 Birgland/Schwend (DE); GUMANN, Patrick, 91275 Auerbach (DE); KELLERMANN, Robert, 64295 Darmstadt (DE)
(74) Vertreter: Maucher Jenkins Patent- und Rechtsanwälte

(56) Entgegenhaltungen:
- WO-A1-2015/185113
- US-A1- 2018 020 355
- US-A1- 2018 115 563

## Beschreibung

Die Erfindung betrifft eine Lösung zur Schadensbegrenzung nach der Infektion eines mit Computerfunktionalitäten ausgestatteten mobilfunkfähigen Endgeräts mit Malware. Sie bezieht sich insbesondere darauf, den Schaden zu begrenzen, der im Falle einer Infektion eines entsprechenden Endgeräts, wie beispielsweise eines Smartphones oder eines mit einem SIM (Subscriber Identity Module) ausgestatteten Tablet-PCs mit einer Schadsoftware entsteht, durch welche dieses Endgerät in ein Botnetz eingegliedert wird. Die nachfolgend vorgestellte technische Lösung ermöglicht es dabei, sowohl den möglichen Schaden für das mit der Malware infizierte mobilfunkfähige Endgerät (im Weiteren verkürzt auch MT für Mobile Terminal) als auch den in der Folge möglichen Schaden für den Netzbetreiber zu begrenzen. Gegenstände der Erfindung sind ein entsprechendes Verfahren und ein zur Durchführung dieses Verfahrens geeignetes System, respektive ein entsprechend ausgebildetes und eingerichtetes Mobilfunknetz.

In der Computertechnik sind die Verbreitung von Schadsoftware und der Schutz davor schon seit langem ein Thema. Bereits in der frühen Phase der Entwicklung von Computern, insbesondere von Personal Computern, und ihrer breiten Einführung in die Arbeitswelt und später in den privaten Bereich wurde für die damit befassten Fachleute erkennbar, dass diese Technik auch Möglichkeiten für Betrug und Missbrauch eröffnet. Sehr schnell wurden auch im größeren Umfang entsprechende Möglichkeiten durch daran interessierte, widerrechtlich und zum Teil auch mit großer krimineller Energie handelnde Personen und Personengruppen entwickelt und genutzt.

Einen Schub erhielt diese Entwicklung mit der sehr rasch steigenden allgemeinen Nutzung des Internets. Hierbei wurden durch kriminelle Akteure Softwaremechanismen entwickelt, mit deren Hilfe sie eine große Zahl von sich im Internet befindenden Computern zu einem von ihnen fremdgesteuerten Netz, einem Botnetz, zusammenführen konnten. Den Angreifern war es hierdurch möglich, die Rechenkapazität einer großen Zahl in ein derartiges Netz eingegliederter Computer zu bündeln und mittels der daraus resultierenden Gesamtrechenleistung noch mächtigere und komplexere Angriffe gegen die computertechnische Infrastruktur und gegen computertechnische Einrichtungen von Betreibern größerer Netze zu führen.

Mit der in den letzten Jahren stark gestiegenen Leistungsfähigkeit von Mobilfunkgeräten und deren Ausstattung mit Computerfunktionalitäten sowie durch die immer umfänglicher werdende Nutzung von Internetanwendungen mit derartigen Geräten, wie beispielsweise des Onlinebanking, rückten mobilfunkfähige Endgeräte MT auch zunehmend stärker in den Fokus von Betrügern und anderen, Schadsoftware mit unterschiedlichster Motivation in den Umlauf bringenden Personen. Daher steigt auch die Zahl mit Schadsoftware infizierter mobilfunkfähiger Endgeräte ständig an. Mögliche Wege für die Infektion solcher Endgeräte sind beispielsweise betrügerische SMS-Nachrichten (Smishing SMS) oder auch unsichere externe Quellen für den Bezug mit derartigen Geräten nutzbarer Software.

Wird infolge der Infektion eines MT mit einer Schadsoftware, durch welche das betreffende Endgerät beispielsweise in ein Botnetz eingegliedert wird, durch dafür ausgebildete Netzwerkeinrichtungen eines Netzbetreibers ein ungewöhnlicher Datenverkehr in Bezug auf dieses MT detektiert, stehen zwischenzeitlich automatisierte technische Mechanismen zur Verfügung, um einerseits den Nutzer eines mit einer Schadsoftware infizierten MT hierauf aufmerksam zu machen und andererseits technische Prozesse zu initiieren, welche darauf abzielen, den daraus möglicherweise resultierenden Folgeschaden zu beschränken. Was die Frage der Erkennung eines ungewöhnlichen Datenverkehrs anbelangt, so kann sich dies beispielsweis auf die Menge eingehenden und ausgehenden Datenverkehrs, also insbesondere auf ein gegenüber vorausgegangenen Nutzungszeiträumen auffällig erhöhtes Datenvolumen, beziehen. Darüber hinaus können aber auch eine plötzliche Trendänderung bei der Nutzung von Diensten mit dem MT und/oder eine Veränderung bei Datennutzungssignaturen häufig ziemlich eindeutig auf eine Infektion des MT mit einer Malware hinweisen. Schließlich stellt aber selbstverständlich auch die Herstellung von Verbindungen zwischen dem MT und einer dem Mobilfunknetzbetreiber bekannten C2-IP-Adresse, also der Adresse eines für Missbrauchsaktivitäten genutzten Command and Control Servers ein untrügliches Anzeichen für eine Infektion dar.

So werden durch mit Schadsoftware infizierte Mobilfunkgeräte beispielsweise häufig massenweise SMS-Nachrichten an andere Mobilfunkteilnehmer, insbesondere an Mobilfunkteilnehmer, respektive an Mobilfunknummern, die in einem Adressbuch des betroffenen MT gespeichert sind, versendet. Derartige SMS-Nachrichten können, zum Beispiel mittels eines in ihnen enthaltenen Links, dazu führen, weitere mobilfunkfähige Endgeräte in das Botnetz einzugliedern, sofern deren Nutzer den betreffenden Link anklicken. Ferner kann aber auch der massenweise durch eine Vielzahl von MT erfolgende Versand von SMS-Nachrichten zu einer Destabilisierung des Mobilfunknetzes führen. Darüber hinaus stellen Angriffe wie Telephone-Denial-of-Service-Atacken, insbesondere im Falle einer Blockierung von Notrufdiensten, ein schwerwiegendes Problem dar. Es ist daher sowohl im Interesse der Mobilfunknutzer als auch der Netzbetreiber, derartiges durch geeignete Maßnahmen zu unterbinden.

Eine insoweit bereits bekannt gewordene technische Maßnahme ist es, ein als infiziert erkanntes MT mit einer SMS-MO-Sperre (Sperre für ausgehende SMS-Nachrichten) zu belegen. Genauer gesagt wird hierbei eigentlich nicht das Gerät selbst mit einer solchen Sperre belegt, sondern die mit ihm verwendete und insoweit assoziierte SIM-Karte. Zwar können dann durch das betroffene MT unter Nutzung der mit der Sperre belegten SIM-Karte keine SMS-Nachrichten, das heißt insbesondere Massen-SMS, mehr versendet werden, wodurch die mögliche Einbeziehung weiterer mobilfunkfähiger Endgeräte in das Botnetz unterbunden wird. Jedoch bleibt das betreffende MT selbst weiter ein Teil des Botnetzes mit der Folge eines typischerweise umfangreicheren Datenaustauschs zwischen diesem MT als einem einer Vielzahl von Bots und einem das Botnetz und seine Bots steuernden Server des Angreifers, einem Command and Control Server (C2 Server).

Da mit dem Aufkommen das Internet nutzender Messenger die Verwendung von SMS-Nachrichten zunehmend an Bedeutung verliert, ist es nicht selten so, dass der Nutzer eines infizierten MT trotz entsprechender, ihn auf die Infektion hinweisender Nachrichten seines Providers, lediglich die für ihn nicht mehr zur Verfügung stehende Nutzung des SMS-Dienstes hinnimmt, aber nicht für eine Bereinigung seines Endgeräts von der Schadsoftware Sorge trägt.

Als nachteilig ist es außerdem anzusehen, dass durch die Bindung der SMS-MO-Sperre an die SIM-Karte die betreffende SIM-Karte auch nicht mit anderen, nicht von Schadsoftware betroffenen mobilfunkfähigen Endgeräten zum Versand von SMS verwendet werden kann. Andererseits kann wiederum das durch die Schadsoftware infizierte MT durch das Auswechseln der SIM-Karte zumindest vorübergehend auch wieder für den Versand von SMS verwendet werden, also zum Versand auch solcher SMS, durch welche weitere Mobilfunkgeräte in das Botnetz geholt werden.

In US 2018/0020355 A1 wird eine Lösung für ein Redirect eines mit Malware infizierten mobilen Endgeräts beschrieben. Das entsprechende Endgerät, dessen IMSI oder IMEI in einer Liste mit Schadsoftware infizierter mobiler Endgeräte erfasst ist, wird bei der Anmeldung bei einer Basisstation des Mobilfunknetztes auf einen Sicherheitsnetzwerkknoten SNN umgeleitet, welcher in Bezug auf dieses Endgerät diverse Sicherheitsmaßnahmen ergreift, zu denen auch die Blockierung des Datenverkehrs für das Endgerät gehören können. Hierbei wird aber nicht näher darauf eingegangen, wie letzteres bewerkstelligt wird.

Eine vergleichbare Lösung wird außerdem durch die US 2018/0115563 A1 beschrieben. Gemäß dieser Lösung wird der Datenverkehr eines mit einer Malware infizierten, beispielsweise anhand seiner IMEI identifizierten mobilen Endgeräts auf eine in Netzwerkeinrichtungen des Providers spezifizierte Adresse umgeleitet.

Aufgabe der Erfindung ist es, eine alternative Lösung zur Schadensbegrenzung nach der Infektion eines MT mit Malware, insbesondere mit einer dieses Endgerät in ein Botnetz eingliedernden Schadsoftware, zur Verfügung zu stellen. Hierbei soll die betreffende Lösung die Risiken sowohl für den Netzbetreiber als auch für den betroffenen Nutzer/Kunden (Mobilfunknetzteilnehmer) möglichst minimieren. Letzterer soll zudem in der Nutzung der ihm durch seinen Provider vertraglich eingeräumten Dienste möglichst wenig beschränkt werden. Hierzu sind ein Verfahren anzugeben und ein zur Durchführung dieses Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten, das heißt unabhängigen Sachanspruch charakterisiert. Vorteilhafte Aus- und Weiterbildungen sind durch die Unteransprüche gegeben.

Das zur Lösung der Aufgabe vorgeschlagene Verfahren zur Schadensbegrenzung nach einer bei einem mit Computerfunktionalitäten ausgestatteten mobilfunkfähigen Endgerät (im Weiteren auch MT = Mobile Terminal) eingetretenen Infektion mit Malware geht davon aus, dass eine derartige Infektion eines MT mit einer Schadsoftware durch dafür ausgebildete und eingerichtete Netzwerkeinrichtungen eines Netzbetreibers detektiert wird. Genauer gesagt wird die Infektion detektiert von Netzwerkeinrichtungen des Betreibers des Mobilfunknetzes, zu dessen Verwendung ein von einem Mobilfunkprovider ausgegebenes und mit dem MT genutztes Teilnehmeridentifikationsmodul (SIM) den Nutzer des infizierten MT berechtigt. In diesem Zusammenhang sei nur vorsorglich erwähnt, dass es sich bei dem vorgenannten Mobilfunkprovider als dem Ausgeber des SIM auch um den Netzbetreiber selbst handeln kann, aber nicht muss. Lösungen, nämlich technische Vorgehensweisen und Einrichtungen zur Detektion einer Infektion mobilfunkfähiger (computerbasierter) Endgeräte mit Schadsoftware, sind aus dem Stand der Technik bekannt und befinden sich in unterschiedlichster Form bei verschiedenen Netzbetreibern im Einsatz.

Diese Lösungen, welche insbesondere grundsätzlich auch die Möglichkeit einschließen, Malware zu detektieren, durch welche ein infiziertes MT in ein Botnetz eingegliedert wird, sollen daher hier nicht näher betrachtet und beschrieben werden. Ihre spezielle Ausbildung gehört jedenfalls nicht zum Gegenstand der vorliegenden Erfindung, wenngleich sie ungeachtet dessen natürlich in den nachfolgend beschriebenen Lösungsansatz als gewissermaßen vorgelagerter Schritt insoweit mit einbezogen werden, als eine Schadensbegrenzung bei einer eingetretenen Infektion mit Malware selbstverständlich voraussetzt, dass eine solche Infektion zunächst erkannt wird. An dieser Stelle sei dazu nur so viel ausgeführt, dass entsprechende Infektionen von Endgeräten mit Malware typischerweise anhand beobachteter ungewöhnlicher Datenverkehre von und zu dem infizierten MT, zum Beispiel mittels heuristischer Methoden, erkennbar sind.

Die zur Schadensbegrenzung nach der Malware-Infektion eines MT vorgeschlagene Verfahrensweise basiert jedoch abweichend vom Stand der Technik nicht darauf, für ein von einer solchen Infektion betroffenes MT etwa das Senden von SMS zu unterbinden oder sonstige an das mit dem MT verwendete SIM und damit an den Vertrag des das MT nutzenden Kunden/Teilnehmers gekoppelte Sperrungen vorzunehmen. Vielmehr wird für das von der Infektion mit der Schadsoftware betroffene MT unter Rückgriff auf die für dieses durch die Netzwerkeinrichtungen des Netzbetreibers ermittelte internationale Identitätsnummer für mobile Geräte (IMEI = International Mobile Equipment Identity) der Datenverkehr, nämlich insbesondere der an ein verfügbares Datenvolumen gebundene Datenverkehr, gesperrt. Das heißt, es wird keine an den Account, respektive Kundenvertrag des Teilnehmers gebundene Sperre eingeführt.

Insoweit bleibt von der IMEI-bezogenen Sperre auch die SIM-Karte, mittels derer sich der Teilnehmer/Kunde gegenüber dem Mobilfunknetz zur Nutzung der ihm vertraglich zugesicherten Leistungen identifiziert, vollständig unberührt. Sie kann durch den Teilnehmer/Kunden aus dem infizierten MT entnommen werden und ohne jegliche Einschränkungen mit einem anderen, nicht infizierten mobilfunkfähigen Endgerät genutzt werden. Mit einem anderen, von Schadsoftware freien Endgerät ist dabei, neben der Nutzung telekommunikativer Leistungen, wie Telefonie und SMS, insbesondere auch ein im Rahmen des tariflich zugesicherten Datennutzungsumfangs uneingeschränkter Datenverkehr, zum Beispiel zur Nutzung von Internetanwendungen, möglich.

Das zuvor hinsichtlich seines grundsätzlichen Lösungsansatzes beschriebene Verfahren umfasst zumindest folgende Verfahrensschritte:
a.) Feststellen einer Infektion des MT: Die Feststellung der Infektion erfolgt durch ein von den Netzwerkeinrichtungen des Netzbetreibers umfasstes Missbrauchserkennungssubsystem (im Weiteren auch ADS = Abuse Detection Subsystem) bei der Nutzung des Mobilfunknetzes mittels des mit einem aktivierten SIM (Subscriber Identity Module) ausgestatten MT. Wie bereits ausgeführt, sind hierzu gebräuchliche Techniken zur Untersuchung und Analyse des von einem MT ausgehenden und des bei ihm eingehenden Datenverkehrs bekannt und bereits im Einsatz.
b.) Meldung des infizierten MT: Die eingetretene Infektion wird durch das sie feststellende ADS an mindestens eine dafür vorgesehene Netzwerkeinrichtung des Netzbetreibers unter Angabe zumindest der IMEI des betroffenen MT und einer an das mit dem MT genutzte SIM gekoppelten Teilnehmer-ID (wie insbesondere der IMSI = International Mobile Subscriber Identity ) gemeldet. Hierbei ist es eine Frage der Implementierung eines (wie gesagt, als solches bekannten) ADS, ob das ADS bereits im Zuge des Detektierens eines mit Schadsoftware infizierten MT unmittelbar auch über die IMEI dieses MT verfügt oder dessen IMEI zunächst bei anderen Netzwerkeinrichtungen, respektive von diesen Netzwerkeinrichtungen gehaltenen Datenbanken, des Mobilfunknetzes erfragen muss.
   Im letztgenannten Fall verfügt das ADS zumindest über die auf einem mit dem MT augenblicklich genutzten SIM gehaltene Teilnehmer-ID. Mittels der Teilnehmer-ID kann das ADS die IMEI des das zugehörige SIM verwendenden MT bei entsprechenden, durch alle bekannten Mobilfunknetze geführten Datenbanken, respektive Registern, abfragen. In jedem Fall sendet das ADS eine Meldung über die detektierte Infektion an mindestens eine zu deren Empfang eingerichtete Netzwerkeinrichtung des Mobilfunknetzes unter Angabe der IMEI des von der Infektion betroffenen MT aus.
c.) Generieren einer Sperranforderung: Durch die mindestens eine die Meldung über die detektierte Infektion empfangende Netzeinrichtung wird eine auf die IMEI des infizierten MT bezogene Sperranforderung (IMEI-Sperranforderung) generiert. Bei der letztgenannten mindestens einen Netzwerkeinrichtung kann es sich um eine Netzwerkeinrichtung handeln, welche gegebenenfalls noch weitere Funktionen ausführt und beispielsweise Teil eines Ticket-Subsystems ist.
d.) Erzeugen eines IMEI-Sperreintrags: Durch mindestens eine hierfür ausgebildete Netzwerkeinrichtung wird, auf den Empfang dieser Sperranforderung hin, ein mit der IMEI des infizierten MT assoziierter Sperreintrag in mindestens einer zur Nutzung des Mobilfunknetzes für die Datenübertragung durch Netzwerkeinrichtungen des Netzbetreibers zwingend anzusprechenden Datenbank, wie beispielsweise in der CNT-DB (Core Network Technology Database) des Mobilfunknetzes oder in einem Home Location Register, erzeugt.
e.) Nullsetzen des verfügbaren Datenvolumens: Für das SIM-Modul, welches in dem mit einem Sperreintrag in der oder den relevanten Datenbanken des Netzbetreibers (IMEI-Sperreintrag) belegten MT verwendet wird, respektive für die auf diesem SIM gehaltene Teilnehmer-ID, wird das Datenvolumen auf null gesetzt, wenn sich das MT bei einem Mobilfunknetz anmeldet, was stets mit der Aussendung seiner IMEI verbundenen ist.
   Typischerweise, jedenfalls soweit sich das MT in einem Bereich befindet, der unmittelbar durch das Mobilfunknetz abgedeckt wird, für dessen Verwendung das mit ihm genutzte SIM ausgegeben wurde (Heimatnetz), meldet sich das MT zur Herstellung einer Verbindung mit dem Mobilfunknetz unter anderem unter Aussendung der auf dem SIM gehaltenen Teilnehmer-ID und der IMEI bei einer Basisstation des Betreibers des Heimatnetzes an. Hier werden dann die Teilnehmer-ID und seine IMEI beispielsweise unter Rückgriff auf das Home Location Register (HLR), respektive auf die CNT-DB, auf die Berechtigung zur Nutzung des Mobilfunknetzes sowie, im Falle des Bestehens einer solchen Berechtigung, auf deren Umfang hinsichtlich der in dem Mobilfunknetz tariflich nutzbaren Leistungen überprüft. Ähnliches geschieht, sofern sich das MT unter Nutzung eines Roaming an der Basisstation eines Fremdnetzes anmeldet.
   Wird im Zuge der zuvor angesprochenen Überprüfung festgestellt, dass zu der IMEI des sich bei dem Mobilfunknetz anmeldenden MT ein Sperreintrag in einer dafür vorgesehenen Datenbank existiert, so wird für das mit dem betroffenen MT verwendete SIM, respektive für die darauf gehaltene Teilnehmer-ID das verfügbare Datenvolumen durch eine hierfür ausgebildete und eingerichtete Netzwerkeinrichtung des Netzbetreibers auf null gesetzt. Dies führt dann unmittelbar zur Umsetzung des nachfolgend genannten letzten Verfahrensschritts.
f.) Unterbindung des Datenverkehrs: Für das von der IMEI-Sperre betroffene MT wird, für die Dauer des Bestehens des Sperreintrags zu dieser IMEI in der oder den relevanten Datenbanken des Netzbetreibers, jeglicher ein verfügbares Datenvolumen erfordernder Datenverkehr unterbunden. Die Aufhebung der IMEI-Sperre erfolgt durch den Netzbetreiber insbesondere nach Bereinigung des MT von der Malware und beispielsweise auf entsprechenden Antrag durch den Nutzer des MT.
   Die Nutzung bestimmter Dienste und der Datenaustausch mit diesen Diensten bleibt aber auch bei bestehender IMEI-Sperre möglich. Es handelt sich hierbei um als Zero-Rated-Services bezeichnete Dienste, deren Nutzbarkeit nicht an ein bestehendes Datenvolumen gebunden ist, deren Nutzung also bei nicht gesperrten Endgeräten nicht zu Lasten eines bestehenden Datenvolumens geht, selbst wenn sie gegebenenfalls auch anders erreichbar sind, zum Beispiel über SMS. Hierunter fallen beispielsweise Notfalldienste, wie zum Beispiel die Notfallortung, Dienste die über Warn-Apps oder Notruf-Apps verfügbar gemacht werden, wie zum Beispiel Dienste für behördliche Warnungen, oder bestimmte Services von Netzbetreibern und/oder Mobilfunkprovidern.

Im Hinblick auf den Verfahrensschritte e) und f) sei an dieser Stelle ausdrücklich angemerkt, dass die Unterbindung des Datenverkehrs IMEI-basiert, nämlich basierend auf der IMEI des mit Computerfunktionalitäten ausgestatteten, mit einer Malware infizierten mobilfunkfähigen Endgeräts (MT) erfolgt, auch wenn sie letztlich vorzugsweise unter Zuhilfenahme einer auf der jeweils mit diesem MT verwendeten SIM gehaltenen Teilnehmer-ID prozessiert wird. Das heißt aber auch, dass der Datenverkehr auch dann unterbunden wird, wenn das MT mit einem anderen SIM verwendet wird, aber immer noch infiziert ist, respektive die auf seine IMEI bezogene Sperre noch nicht aufgehoben wurde. Es bedeutet zudem umgekehrt, dass das ursprünglich mit dem infizierten MT verwendete SIM in einem anderen, nicht mit einer IMEI-Sperre belegten (also zumindest unterstelltermaßen malware-freien MT) im Umfang des für das SIM bestehenden Restvolumens des für die darauf gehaltene Teilnehmer-ID tariflich zugesicherten Datenvolumens für einen Datenaustausch mit und über das Internet genutzt werden kann. Beim Gebrauch mit diesem anderen Endgerät wird folglich das Datenvolumen bezogen auf das SIM nicht auf null gesetzt.

Die zuvor dargestellten Abläufe können sich im Zusammenwirken der entsprechenden Netzwerkeinrichtungen des Netzbetreibers vollständig automatisiert vollziehen. Dabei ist dann lediglich im Hinblick auf den Schritt f.) ein Mitwirken des Besitzers des infizierten MT als Teilnehmer/Kunde dahingehend erforderlich, dass es ihm obliegt, gegebenenfalls unter Nutzung ihm dazu von seinem Mobilfunkprovider und/oder dem Netzbetreiber angebotener Hilfestellungen und/oder Verfahrensroutinen, sein mobilfunkfähiges Endgerät (MT) von der Schadsoftware zu bereinigen und dann hierüber den Mobilfunkprovider in Kenntnis zu setzen. Der Mobilfunkprovider wird dann in Reaktion hierauf die Aufhebung der IMEI-Sperre veranlassen, wobei auch hierfür erforderliche Abläufe zumindest teilweise automatisiert sein können.

Wie bereits zum Punkt b.) des vorstehenden Verfahrensablaufs angesprochen, wird durch das ADS an die zum Empfang einer Mitteilung über das Vorliegen einer Infektion bei einem MT ausgebildete(n) Netzwerkeinrichtung(en) zusammen mit der entsprechenden Meldung zumindest die IMEI des betroffenen MT übermittelt. Vorzugsweise wird aber von dem ADS an die entsprechenden Netzwerkeinrichtungen, bei denen es sich um Netzwerkeinrichtungen eines Ticket-Subsystems handeln kann, außerdem die Teilnehmer-ID des zum Zeitpunkt der Detektion der Infektion mit dem betroffenen MT verwendeten SIM übermittelt. Hierdurch wird ermöglicht, dass der Kunde/Teilnehmer, vorzugsweise mit einer SMS, über das Vorhandensein einer Schadsoftware auf seinem MT unterrichtet werden kann. Auch dies kann grundsätzlich vollautomatisiert erfolgen.

Gegebenenfalls besteht aber auch die Möglichkeit, dass sich an dieser Stelle eine Kundenhotline in den Prozess mit einschaltet. Dabei kann dann durch die Mitarbeiter dieser Hotline, welche über das Ticket-Subsystem ebenfalls in Kenntnis der auf dem verwendeten SIM gehaltenen Teilnehmer-ID sind, Kontakt zu dem betroffenen Kunden/Teilnehmer aufgenommen werden. Die Mitarbeiter der Hotline können dem Kunden dabei weitere Informationen sowie insbesondere Hinweise dazu geben, wie er sich im Weiteren verhalten sollte. Hierbei können dem Kunden/Teilnehmer auch Informationen über die Möglichkeiten der Bereinigung seines MT von der Schadsoftware gegeben werden.

Beispielsweise kann dem Kunden/Teilnehmer ein zu diesem Zweck zu kontaktierender Link mitgeteilt werden, wobei ein entsprechender Link ihm selbstverständlich (gegebenenfalls ebenfalls automatisiert) mit einer SMS übermittelt werden kann. Wie später noch auszuführen sein wird, kann der Kunde/Teilnehmer aber kumulativ oder alternativ auch auf anderem Wege über einen solchen Link informiert, respektive ihm ein solcher Link zum unmittelbaren Ansteuern einer damit verlinkten Systemseite seines Mobilfunkproviders übermittelt werden. Unabhängig davon handelt es sich bei einem solchen Link um einen Zeiger auf eine IP-Adresse und einen dort gehosteten Dienst des Mobilfunkproviders, welcher von dem Mobilfunkprovider als sogenannter Zero-Rated-Service angeboten wird. Bei solchen Services handelt es sich um Dienste, bei deren Inanspruchnahme keine zusätzlichen Gebühren anfallen und insbesondere von einem dem Kunden vertraglich zugesicherten Datenkontingent trotz eines mit seinem MT erfolgenden Datenaustauschs nichts verbraucht wird. Sie sind demnach mittels eines MT auch ohne verfügbares Datenvolumen nutzbar.

Derartige Services können daher von einem Kunden/Teilnehmer zum Beispiel auch dann in Anspruch genommen werden, wenn er augenblicklich über keinerlei Datenvolumen mehr verfügt. Im Kontext mit der hier vorgestellten Lösung ist es daher dem Kunden/Teilnehmer möglich, mit seinem infizierten MT die mit dem Link verknüpfte WEB-Adresse zu kontaktieren und daraufhin, trotz des Bestehens der IMEI-basierten Sperre des Datenverkehrs, Daten mit der dahinterliegenden Anwendung auszutauschen. Der Kunde/Teilnehmer kann also einen von seinem Provider über einen solchen Link bereitgestellten Dienst zur Bereinigung seines MT von der Schadsoftware in Anspruch nehmen und trotz ansonsten bestehender Datensperre die dafür erforderlichen Daten mit diesem Dienst austauschen.

In Weiterbildung des Verfahrens kann es in Ergänzung des Schrittes f.) vorgesehen sein, dass zwar jeglicher an ein verfügbares Datenvolumen gebundener Datenverkehr für das infizierte MT gesperrt wird, jedoch das betreffende MT bei der Anmeldung bei einem Mobilfunknetz, spätestens aber bei einem Versuch zum Aufbau einer Datenverbindung, durch entsprechende Netzwerkeinrichtungen des Netzbetreibers auf eine spezielle Landing-Page umgeleitet wird. Bei der betreffenden Landing-Page und dem durch diese präsentierten Inhalten handelt es sich dann folglich um einen Zero-Rated-Service seines Providers und/oder des Netzbetreibers. Über die Landing-Page können dem Kunden/Teilnehmer zusätzliche Informationen über die Infektion seines MT sowie ein Link zu dem schon angesprochenen Bereinigungsservice angeboten werden. Oder dem Nutzer wird eine Anleitung für eine durch ihn selbst durchzuführende Bereinigung seines MT von der Schadsoftware vermittelt. Über eine entsprechende Landing-Page kann aber beispielsweise auch ein Formular zur Erstattung von Kosten angeboten werden, welche infolge der Infektion, beispielsweise durch nicht vom Nutzer getätigte Anrufe zu hochpreisigen Destinationen, durch die nicht vom Nutzer veranlasste Buchung von Mehrwertdiensten oder durch den ungewollten Versand von SMS ins Ausland, entstanden sind. Auch ein (ausnahmsweise) temporäres Entsperren seines noch infizierten, aber augenblicklich einschließlich der Möglichkeit eines Datenaustausches dringend benötigten MT kann einem Nutzer über die Landing-Page ermöglicht werden.

Sofern der Kunde/Teilnehmer sein MT gegebenenfalls mit Hilfe seines Providers von der Schadsoftware bereinigt und den Mobilfunkprovider hierüber informiert hat, wird die bis dahin bestehende IMEI-Sperre wieder aufgehoben. Dies kann initiiert durch dafür zuständige Mitarbeiter des Mobilfunkproviders geschehen, welche der Kunde über die Bereinigung seines MT unterrichtet hat oder im Weg eines automatisierten Vorgangs, welcher vom Kunden/Nutzer, nach der Bereinigung seines MT, durch das Versenden einer SMS an eine dafür vorgesehene Rufnummer oder durch den Versandt einer E-Mail an eine dafür vorgesehene Mail-Adresse angestoßen wird. Analog zur Einrichtung der IMEI-Sperre wird dafür von entsprechenden Netzwerkeinrichtungen des Netzbetreibers, beispielsweise von zu dem bereits angesprochenen Ticket-Subsystem gehörenden Netzwerkeinrichtungen, eine Freigabeanforderung generiert und an Netzwerkeinrichtungen übermittelt, durch welche die auf die IMEI bezogenen Sperreinträge in den einschlägigen Datenbanken wieder gelöscht werden.

Ein die Aufgabe lösendes System, nämlich ein Mobilfunknetz, welches zur Durchführung des Verfahrens ausgebildet und eingerichtet ist, umfasst zunächst eine Mehrzahl von auch bei anderen, das heißt aus dem Stand der Technik bekannten Mobilfunknetzen, bekannte Netzwerkeinrichtungen. Hierzu gehören
- Netzwerkeinrichtungen zur funkbasierten Verbindung von mobilfunkfähigen Endgeräten MT mit dem Mobilfunknetz,
- Netzwerkeinrichtungen zur Übertragung von Gesprächsdaten und sonstigen Daten zwischen mindestens ein MT umfassenden Kommunikationsendeinrichtungen über das Mobilfunknetz sowie zur Steuerung dieser Übertragungsvorgänge,
- Netzwerkeinrichtungen zur datenbankgestützten Verwaltung von Vertrags-und Nutzerdaten,
- Netzwerkeinrichtungen, welche ein Missbrauchserkennungssubsystem ADS ausbilden, und selbstverständlich
- Netzwerkeinrichtungen, welche in geeigneter Weise auf eine für ein MT von dem ADS festgestellte Infektion reagieren können. Die letztgenannten Netzwerkeinrichtungen sind als Missbrauchseindämmungseinrichtungen AME dazu ausgebildet und eingerichtet sind, von dem ADS zu detektierten Missbrauchsfällen eingehende Meldungen zur Einleitung dafür vorgesehener Maßnahmen zu verarbeiten.

Für die teilweise bereits vorstehend, aber insbesondere nachfolgend und in den Patentansprüchen verwendeten Kürzel sollen an dieser Stelle einmal zusammen mit ihrer jeweiligen Bedeutung aufgelistet werden.

| | |
|---|---|
| ADS = | Abuse Detection Subsystem (Missbrauchserkennungssubsystem) |
| AME = | Abuse Mitigation Equipment (Missbrauchseindämmungseinrichtungen) |
| IMEI = | International Mobile Equipment Identity (Internationale Mobilfunk Ausrüstungserkennung) |
| IMSI = | International Mobile Subscriber Identity (Internationale Mobilfunk-Teilnehmererkennung |
| MT = | Mobile Terminal (mobilfunkfähiges Endgerät, hier mit Computerfunktionalitäten) |
| SIM = | Subscriber Identity Module (Teilnehmer-Identitätsmodul) |
| CNT-DB = | Core Network Technology Database |
| HLR = | Home Location Register |

Bei dem hier vorgeschlagenen Mobilfunknetz ist das von ihm umfasste ADS dazu ausgebildet, eine Infektion eines MT bei der Nutzung des Mobilfunknetzes mit diesem MT nicht nur zu detektieren, sondern auch eine die IMEI des betroffenen MT enthaltene Meldung die zuvor angesprochenen AME auszusenden. Die AME ihrerseits umfassen
- mindestens eine Netzwerkeinrichtung, die dazu ausgebildet und eingerichtet ist, Meldungen zu infizierten MT von dem ADS zu empfangen und für ein jeweiliges ihr gemeldetes, von einer Infektion betroffenes MT eine auf die IMEI dieses MT bezogene Sperranforderung zu generieren und auszusenden,
- mindestens eine Netzwerkeinrichtung, die dazu ausgebildet und eingerichtet ist, nach dem Empfang einer IMEI bezogenen Sperranforderung einen mit der betreffenden IMEI assoziierten Sperreintrag in mindestens einer zur Nutzung des Mobilfunknetzes für die Datenübertragung durch Netzwerkeinrichtungen des Netzbetreibers zwingend anzusprechenden Datenbank, wie beispielsweise die CNT-DB oder das Home Location Register, zu erzeugen,
- mindestens eine Netzwerkeinrichtung, welche dazu ausgebildet und eingerichtet ist, eine ihr zugeleitete IMEI eines sich bei dem Mobilfunknetz anmeldenden MT auf das Vorhandensein einer IMEI-Sperre in der mindestens einen zur Nutzung des Mobilfunknetzes anzusprechenden Datenbank des Netzbetreibers zu prüfen und im Falle des Bestehens einer solchen Sperre das für das mit der IMEI assoziierte MT verfügbare Datenvolumen auf null zu setzen.

Selbstverständlich wird das System, respektive das Mobilfunknetz außerdem über Netzwerkeinrichtungen verfügen, mittels welcher nach einer (vorzugsweise durch den Teilnehmer/Nutzer dem Netzbetreiber gemeldeten) Bereinigung des MT von der Malware eine Aufhebung der IMEI-Sperre bewirkt wird, welche jedoch im Rahmen der hier vorgestellten technischen Lösung nur am Rande erwähnt und nicht näher betrachtet werden sollen. Im Rahmen einer praxisgerechten Umsetzung der hier näher betrachteten Lösung wird insoweit vorzugsweise die mindestens eine die Sperranforderung generierende und aussendende Netzwerkeinrichtung auch dazu ausgebildet und eingerichtet sein, später (nach gemeldeter Bereinigung des MT) eine Anforderung zur Aufhebung der Sperre zu generieren und auszusenden. Entsprechend wird die mindestens eine zunächst den Sperreintrag in der oder den vorgesehen Datenbanken erzeugende Netzwerkeinrichtung auch dafür ausgebildet sein, diesen Sperreintrag aufgrund einer Anforderung auf Aufhebung in den betreffenden Datenbanken wieder zu löschen.

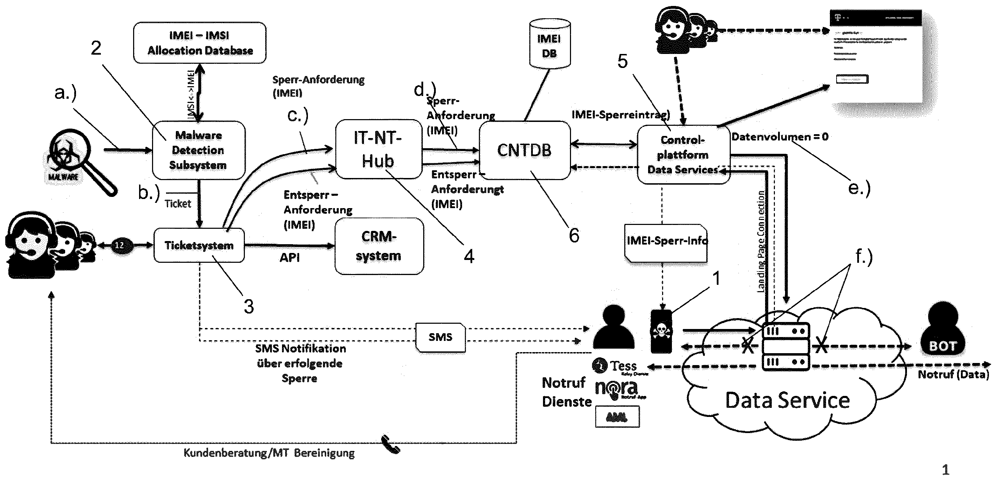

Nachfolgend soll anhand einer Zeichnung ein Ausführungsbeispiel für den Ablauf des Verfahrens gegeben werden. Die Fig. 1 zeigt dazu eine schematische Darstellung, aus welcher auch das Zusammenspiel der Einheiten eines zur Durchführung des Verfahrens geeigneten Systems, respektive eines dafür ausgebildeten und eingerichteten Mobilfunknetzes erkennbar wird.

Als Ausgangssituation sei angenommen, dass ein mobilfunkfähiges Endgerät (MT 1) bei der Nutzung des Internet, also im Zuge eines Datenaustauschs mit einem oder mehreren computerbasierten Einrichtungen oder Geräten im Inter-net, mit einer Schadsoftware (Malware) infiziert wurde, durch welches das betreffende MT 1 in ein Botnetz (BOT) eingegliedert wurde. Die (auf widerrechtliche Weise) in das Botnetz eingegliederten Endgeräte, so auch das mit der Malware infizierte MT 1, werden durch einen Command and Control Server (C2 Server), welcher durch einen Angreifer hierfür eingesetzt wird, gesteuert und kontrolliert. Der Angreifer kann infolgedessen das computertechnische Leistungsvermögen der von ihm infizierten und mittels des C2 Servers kontrollierten Endgeräte für beliebige, im Allgemeinen kriminelle Zwecke einsetzen. Insbesondere, soweit es sich bei den infizierten Endgeräten um mobilfunkfähige Endgeräte (MT) handelt, können diese von dem Angreifer zur künstlichen Erzeugung von Anrufen und Kurznachrichten (SMS) sowie zu deren Weiterleitung in der Art eines Schneeballsystems, beispielsweise auch zur Erzeugung automatisierter Rückrufe, genutzt werden. Voraussetzung dafür ist jedoch in jedem Falle eine zwischen dem infizierten MT und dem C2 Server bestehende Datenverbindung.

Ein weiteres, häufig zu beobachtendes Angriffsszenario stellen sogenannte Distributed Denial-of-Service-Attacken (DDoS) dar, wobei Netzwerkeinrichtungen eines Netzbetreibers und/oder Providers oder Server von Dienstleistern mit Massenanfragen angegriffen werden, welche zu einer Überlastung und damit zu einer zumindest temporären Nichtverfügbarkeit dieser Systeme führen. Mit Hinblick auf das bereits erwähnte Erzeugen von Kurznachrichten (SMS) ist ein wesentliches Angriffselement zudem die Weiterverbreitung der Schadsoftware, beispielsweise durch Übermittlung einer einen Link zum (ungewollten) Download der Schadsoftware enthaltenden SMS. Eine solche SMS und das Anklicken des darin enthaltenen Links kann beispielsweise auch ursächlich für die Infektion des hier mit Blick auf die Fig. 1 betrachteten MT 1 mit Malware sein.

Die zuvor beispielhaft genannten Angriffsaktivitäten, welche durch den C2 Server an dem mit der Malware infizierten und in das Botnetz eingegliederten MT 1 ausgelöst werden, führen typischerweise an dem betreffenden MT 1 zu einem hinsichtlich des Datenvolumens und/oder seiner Art auffälligen Datenverkehrsaufkommen. Diese Auffälligkeiten im Datenverkehr des MT 1 können mit Hilfe eines komplexen, das Mobilfunknetz monitorenden Missbrauchserkennungssubsystems ADS 2 des Netzbetreibers unter anderem auch mit Hilfe heuristischer Methoden analysiert und als Infektion dieses MT 1 mit einer Schadsoftware interpretiert werden (Schritt a. im Schema).

Das ADS 2 sendet (Schritt b.) hierauf eine zumindest die IMEI des als infiziert erkannten MT 1 enthaltende Mitteilung aus, mit welcher es auf die detektierte Infektion aufmerksam macht. Dabei verfügt das ADS 2 entweder bereits im Zusammenhang mit den zur Detektion der Infektion analysierten Daten über die IMEI des betroffenen MT 1. Oder aber das ADS 2 verfügt zumindest über die auf dem aktuell mit dem MT 1 genutzten SIM gehaltene Teilnehmer-ID und kann über eine Datenbankabfrage bei entsprechenden Netzwerkeinrichtungen des Mobilfunknetzes die korrespondierende IMEI des MT 1 ermitteln.

Die von dem ADS 2 ausgesendete Nachricht über die detektierte Infektion läuft gemäß dem gezeigten Beispiel bei den Netzwerkeinrichtungen 3 eines Ticket-Subsystems des Netzbetreibers auf, welches Teil einer erfindungsgemäß ausgebildeten und eingerichteten Missbrauchseindämmungseinrichtung AME des Mobilfunknetzes ist. Neben der IMEI des infizierten MT 1 enthält die besagte Meldung typischerweise auch Angaben zu dem augenblicklich mit dem MT 1 verwendeten SIM, wie insbesondere eine Teilnehmer-ID des das MT 1 mit dem entsprechenden SIM verwendenden Kunden/Teilnehmers/Nutzers. Durch das Ticket-Subsystem, respektive Ticketsystem 3, wird eine SMS an den durch die Teilnehmer-ID identifizierten Kunden/Teilnehmer, also an das als infiziert erkannte MT 1, übermittelt.

Mit der entsprechenden SMS wird der Kunde/Teilnehmer auf die festgestellte Infektion aufmerksam gemacht und mit weiteren Informationen dazu sowie Vorschlägen für die weitere Vorgehensweise versorgt. So kann der Kunde beispielsweise um Kontaktaufnahme mit einer Hotline gebeten werden oder ihm ein Link zu einem Dienst übermittelt werden, welcher ihn bei der Bereinigung seines MT 1 von der Schadsoftware unterstützt. Je nach praktischer Umsetzung des Verfahrens wird der Kunde zudem mit der vorgenannten SMS oder mit einer weiteren, dieser nachfolgenden SMS darauf aufmerksam gemacht, dass sein MT 1 in Kürze für den Datenverkehr gesperrt wird. Im Nachgang wird dann durch das Ticket-Subsystem 3 als Teil der AME unter Bezug auf die IMEI des infizierten MT 1 eine Sperranforderung zum Setzen einer Datensperre für das von der Infektion betroffene MT generiert. Die entsprechende Sperranforderung (Request) läuft bei einer weiteren Netzwerkeinrichtung 4 des AME auf (Schritt c.), welche hieraufhin diese Sperranforderung umsetzt, indem sie in mindestens einer für die Datenübertragung durch Netzwerkeinrichtungen des Netzbetreibers zwingend anzusprechenden Datenbank 6 des Mobilfunknetzes einen mit der IMEI des infizierten MT 1 assoziierten Sperreintrag erzeugt (Schritt d.).

Meldet sich nun das infizierte MT 1 bei einem Mobilfunknetz an, so sendet es (unabhängig davon, ob es sich bei dem vorgenannten Mobilfunknetz um das Heimnetz oder ein Fremdnetz handelt) die auf dem SIM (auf der SIM-Karte) gehaltene Teilnehmer-ID, aber unter anderem auch seine IMEI aus. Durch die Netzwerkeinrichtungen des Betreibers des Mobilfunknetzes, bei welchem sich der Teilnehmer/Kunde anmeldet, werden die Teilnehmer-ID und die IMEI ausgewertet, um die Berechtigung des Kunden/Teilnehmers zur Nutzung des Mobilfunknetzes zu überprüfen und bei gegebener Berechtigung den dem Kunden/Teilnehmer vertraglich zugesicherten Leistungsumfang zu ermitteln. Die entsprechenden Netzwerkeinrichtungen greifen hierzu (auch im Falle dessen, dass sich der Kunde/Teilnehmer bei einem Fremdnetz anmeldet) unter anderem auf Datenbanken des Betreibers des Heimatnetzes, wie zum Beispiel die Core Network Technology Database (CNT-DB 6) zu. Aufgrund der Infektion des MT 1 wird im Zuge der vorgenannten Überprüfungsvorgänge festgestellt, dass zu der IMEI des MT 1 in der oder den dafür relevanten Datenbank(en) 6 ein Sperreintrag enthalten ist.

Dies führt dazu, dass durch eine ebenfalls zu den AME gehörende sowie hierfür ausgebildete und eingerichtete Netzwerkeinrichtung 5 das verfügbare Datenvolumen für die Verwendung des SIM mit dem infizierten MT 1 auf null gesetzt wird. Dadurch wird für das betroffene MT 1 jeglicher, an ein verfügbares Datenvolumen gebundener Datenverkehr (ein- und ausgehend) unterbunden. Dem unterfallen jedoch nicht Datenverbindungen zu einem durch einen dem Kunden/Teilnehmer anfangs mit einer SMS übermittelten Link adressierten Server, welcher insoweit einen Zero-Rated-Service anbietet, bei dessen Nutzung der Kunde/Teilnehmer beispielsweise bei der Bereinigung seines MT 1 von der Schadsoftware unterstützt wird. Ebenfalls nicht betroffen hiervon ist die Möglichkeit, mit dem betroffenen MT 1 weiterhin zu telefonieren und SMS zu empfangen sowie zu versenden. Darüber hinaus kann das Verfahren auch in der Weise implementiert sein, dass das infizierte MT 1 beim Versuch des Aufbaus einer Datenverbindung unmittelbar auf eine vom Mobilfunkprovider und/oder Netzbetreiber zur Verfügung gestellte Landing-Page geleitet wird, über welche der Kunde/Teilnehmer nochmals explizit auf die Infektion seines MT 1 aufmerksam gemacht und gegebenenfalls über Möglichkeiten zu deren Beseitigung informiert wird. Während des Bestehens der IMEI-Sperre ist für das MT 1 außerdem ein Datenverkehr im Rahmen der Nutzung anderer Zero-Rated-Services, zum Beispiel bei der Nutzung von Notruf-Apps (beispielsweise "nora") oder Warn-Apps (beispielsweise "NINA") möglich.

Sobald der Kunde/Teilnehmer sein MT 1 von der Schadsoftware befreit hat, kann er unter Verwendung einer ihm eingangs mit der SMS zur festgestellten Infektion mitgeteilten Rufnummer eine SMS an einer Service Hotline übermitteln, mit welcher er über die erfolgte Bereinigung des MT 1 informiert. Hieraufhin wird durch die Netzwerkeinrichtungen des zu dem AME gehörenden Ticket-Subsystems 3 eine Freigabeanforderung für das über seine IMEI identifizierte MT 1 generiert und in Umsetzung dieser Anforderung durch andere Einheiten der AME eine Löschung der Sperreinträge in der mindestens einen dafür einschlägigen Datenbank 6, hier die CNT-DB (Core Network Technology Database), veranlasst.

## Patentansprüche

1. Verfahren zur Schadensbegrenzung nach der Infektion eines mit Computerfunktionalitäten ausgestatteten mobilfunkfähigen Endgerätes MT (1) mit Malware, nämlich mit einer Schadsoftware, wobei die Infektion des MT (1) detektiert wird durch dafür ausgebildete Netzwerkeinrichtungen (2) eines Netzbetreibers, nämlich des Betreibers des Mobilfunknetzes, zu dessen Verwendung ein mit dem MT (1) genutztes Teilnehmeridentifikationsmodul SIM den Nutzer des MT (1) berechtigt, wobei für das von der Infektion mit der Schadsoftware betroffene MT (1) unter Rückgriff auf die für dieses MT (1) durch die Netzwerkeinrichtungen (2) des Netzbetreibers ermittelte Internationale Identitätsnummer für mobile Geräte IMEI der Datenverkehr gesperrt wird, wobei das Verfahren zumindest folgende Verfahrensschritte umfasst:
a.) Feststellen einer Infektion des MT (1) durch ein von den Netzwerkeinrichtungen des Netzbetreibers umfasstes Missbrauchserkennungssubsystem ADS (2) bei der Nutzung des Mobilfunknetzes mittels des mit einem aktivierten SIM ausgestatteten MT (1),
b.) Meldung des infizierten MT (1) an mindestens eine dafür vorgesehene Netzwerkeinrichtung (3) des Netzbetreibers unter Angabe zumindest der IMEI des betroffenen MT (1) und einer an das SIM gekoppelten Teilnehmer-ID durch das ADS,
c.) Generieren einer auf die IMEI des infizierten MT (1) bezogenen Sperranforderung durch die mindestens eine, die Meldung über das infizierte MT empfangende Netzwerkeinrichtung (3),
d.) Erzeugen eines IMEI-Sperreintrags, nämlich eines mit der IMEI des infizierten MT (1) assoziierten Sperreintrags in mindestens einer zur Nutzung des Mobilfunknetzes für die Datenübertragung durch Netzwerkeinrichtungen des Netzbetreibers zwingend anzusprechenden Datenbank (6), durch mindestens eine hierfür ausgebildete Netzwerkeinrichtung (4),
e.) Nullsetzen des verfügbaren Datenvolumens für das in dem mit dem IMEI-Sperreintrag belegten MT (1) genutzte SIM bei der Anmeldung des dabei seine IMEI aussendenden MT (1) bei einem Mobilfunknetz,
f.) Unterbindung jeglichen an ein verfügbares Datenvolumen gebundenen Datenverkehrs von und zu dem anhand seiner mit einer Sperre belegten IMEI identifizierbaren MT (1) für die Dauer des Bestehens des Sperreintrags zu dieser IMEI in der mindestens einen Datenbank (6) des Netzbetreibers.

2. Verfahren nach Anspruch 1, **dadurch gekennzeichnet, dass** der Nutzer des mit der Malware infizierten MT (1) mittels einer an dieses MT (1), nämlich an die mit dem in diesem MT (1) genutzten SIM assoziierte Mobilfunknummer ausgesendeten SMS über die festgestellte Infektion informiert wird.

3. Verfahren nach Anspruch 2, **dadurch gekennzeichnet, dass** mit der SMS über die festgestellte Infektion mit Schadsoftware ein Link übermittelt wird, bei dessen durch den Nutzer des infizierten MT (1) erfolgenden Öffnung eine Datenverbindung zu einer auch ohne verfügbares Datenvolumen nutzbaren Internetseite aufgebaut wird, auf welcher der Nutzer detailliertere Informationen zu der für sein MT (1) festgestellten Infektion und/oder zu Möglichkeiten ihrer Bereinigung erhält.

4. Verfahren nach einem der Ansprüche 1 bis 3, **dadurch gekennzeichnet, dass** das mit einer IMEI-Sperre belegte MT (1) beim Versuch des Aufbaus einer Datenverbindung auf eine auch ohne verfügbares Datenvolumen nutzbare Landing-Page der Netzbetreibers und/oder des die mit dem MT (1) genutzte SIM ausgebenden Mobilfunkproviders umgeleitet wird, auf welcher der Nutzer des MT (1) Informationen zu der für sein MT (1) festgestellten Infektion und/oder zu Möglichkeiten ihrer Bereinigung erhält.

5. System, nämlich Mobilfunknetz mit einer Mehrzahl von Netzwerkeinrichtungen, wobei diese umfassen
- Netzwerkeinrichtungen zur funkbasierten Verbindung von mobilfunkfähigen Endgeräten MT (1) mit dem Mobilfunknetz,
- Netzwerkeinrichtungen zur Übertragung von Gesprächsdaten und sonstigen Daten zwischen mindestens ein MT umfassenden Kommunikationsendeinrichtungen über das Mobilfunknetz sowie zur Steuerung dieser Übertragungsvorgänge,
- Netzwerkeinrichtungen zur datenbankgestützten Verwaltung von Vertrags- und Nutzerdaten,
- Netzwerkeinrichtungen, welche ein Missbrauchserkennungssubsystem ADS (2) ausbilden,
- Netzwerkeinrichtungen, welche als Missbrauchseindämmungseinrichtungen AME dazu ausgebildet und eingerichtet sind, von dem ADS zu detektierten Missbrauchsfällen eingehende Meldungen zur Einleitung dafür vorgesehener Maßnahmen zu verarbeiten,
wobei das ADS (2) dazu ausgebildet ist, eine Infektion eines MT (1) bei der Nutzung des Mobilfunknetzes mit diesem MT (1) zu detektieren und eine Meldung zu einer detektierten Infektion unter Angabe der IMEI des betroffenen MT (1) an die AME auszusenden und dass die AME umfassen
- mindestens eine Netzwerkeinrichtung (3), die dazu ausgebildet und eingerichtet ist, Meldungen zu infizierten MT (1) von dem ADS (2) zu empfangen und für ein jeweiliges ihr gemeldetes, von einer Infektion betroffenes MT (1) eine auf die IMEI dieses MT bezogene Sperranforderung zu generieren und auszusenden,
- mindestens eine Netzwerkeinrichtung (4), die dazu ausgebildet und eingerichtet ist, nach dem Empfang einer IMEI bezogenen Sperranforderung einen IMEI-Sperreintrag in mindestens einer zur Nutzung des Mobilfunknetzes für die Datenübertragung durch Netzwerkeinrichtungen des Netzbetreibers zwingend anzusprechenden Datenbank (6) zu erzeugen,
- mindestens eine Netzwerkeinrichtung (5), die dazu ausgebildet und eingerichtet ist, das verfügbare Datenvolumen für ein mit einem IMEI-Sperreintrag in der mindestens einen Datenbank (6) des Netzbetreibers belegtes MT (1) bei dessen Anmeldung bei einem Mobilfunknetz auf null zu setzen und dadurch jeglichen an ein verfügbares Datenvolumen gebundenen Datenverkehr von und zu diesem MT (1) zu unterbinden.

## Claims

1. Method for limiting damage after infection of a mobile-capable terminal device MT (1) equipped with computer functionalities with malware, specifically malicious software, wherein the infection of the MT (1) is detected by specially designed network devices (2) of a network operator, specifically the operator of the mobile network, which the user of the MT (1) is authorized to use by means of a subscriber identification module SIM used with the MT (1), wherein data traffic is blocked for the MT (1) affected by the malware infection by using the International Mobile Equipment Identity (IMEI) number determined for this MT (1) by the network devices (2) of the network operator, wherein the method comprises at least the following method steps of:
a. determining an infection of the MT (1) by an abuse detection subsystem ADS (2) comprised of the network devices of the network operator when using the mobile network by means of the MT (1) equipped with an activated SIM,
b. reporting the infected MT (1) to at least one network device (3) of the network operator designated for this purpose, specifying at least the IMEI of the affected MT (1) and a subscriber ID linked to the SIM card by the ADS,
c. generating a blocking request relating to the IMEI of the infected MT (1) by the at least one network device (3) receiving the report about the infected MT,
d. generating an IMEI blocking entry, specifically a blocking entry associated with the IMEI of the infected MT (1) in at least one database (6) that must be mandatorily addressed in order to use the mobile network for data transmission by network devices of the network operator, by at least one network device (4) designed for this purpose,
e. setting to zero the available data volume for the SIM card used in the MT (1) assigned the IMEI block entry when the MT (1) transmits its IMEI to a mobile network during registration,
f. preventing any data traffic linked to an available data volume from and to the MT (1) identifiable by its blocked IMEI for the duration of the existence of the block entry for this IMEI in the at least one database (6) of the network operator.

2. Method according to claim 1, **characterized in that** the user of the MT (1) infected with malware is informed of the detected infection by means of an SMS sent to this MT (1), specifically to the mobile phone number associated with the SIM card used in this MT (1).

3. Method according to claim 2, **characterized in that** the SMS message informing the user of the detected malware infection also contains a link which, when opened by the user of the infected MT (1), establishes a data connection to a website that can be used even without available data volume, where the user can obtain more detailed information about the infection detected on their MT (1) and/or about ways to remedy it.

4. Method according to one of claims 1 to 3, **characterized in that** when attempting to establish a data connection, the MT (1) subject to an IMEI block is redirected to a landing page of the network operator and/or the mobile phone provider issuing the SIM card used with the MT (1) that can be used even without available data volume, on which the user of the MT (1) receives information about the infection detected on his MT (1) and/or about ways of clearing it.

5. System, specifically a mobile network having a plurality of network devices,
wherein these comprise:
- network devices for the radio-based connection of mobile-capable terminal devices MT (1) to the mobile network,
- network devices for transmitting call data and other data between communication terminal devices comprising at least one MT via the mobile network and for controlling these transmission processes,
- network devices for database-supported management of contract and user data,
- network devices that form an abuse detection subsystem ADS (2),
- network devices that are designed and set up as abuse containment devices AME to process incoming reports of abuse detected by the ADS in order to initiate appropriate measures,
- wherein the ADS (2) is designed to detect an infection of an MT (1) when using the mobile network with this MT (1) and to send a message to the AME about a detected infection, specifying the IMEI of the affected MT (1), and that the AME comprise:
- at least one network device (3) which is designed and configured to receive reports of infected MTs (1) from the ADS (2) and to generate and send a blocking request relating to the IMEI of each MT (1) reported to it as being affected by an infection,
- at least one network device (4) which is designed and configured to generate an IMEI blocking entry in at least one database (6) that must be addressed by network devices of the network operator in order to use the mobile network for data transmission after receiving an IMEI-related blocking request,
- at least one network device (5) which is designed and configured to set the available data volume for an MT (1) assigned an IMEI blocking entry in the at least one database (6) of the network operator to zero when it registers with a mobile network, thereby preventing any data traffic to and from this MT (1) that is linked to an available data volume.

## Revendications

1. Procédé destiné à limiter les dégâts après l'infection d'un terminal de radiotéléphonie mobile MT (1) équipé de fonctionnalités informatiques par un *malware,* c.-à.-d. un logiciel malveillant, dans lequel l'infection du MT (1) est détectée par des dispositifs de réseau (2) ad hoc d'un opérateur de réseau, à savoir l'exploitant du réseau de radiotéléphonie mobile dont l'utilisation est autorisée à l'utilisateur du MT (1) par un module d'identification d'abonné SIM utilisé avec le MT (1), dans lequel le trafic de données est bloqué pour le MT (1) affecté par l'infection par le logiciel malveillant à l'aide du numéro d'identité international pour appareils mobiles IMEI déterminé pour ledit MT (1) par les dispositifs de réseau (2) de l'opérateur de réseau, le procédé comprenant au moins les étapes suivantes :
a) détection d'une infection du MT (1) par un sous-système de détection des abus ADS (2) intégré aux dispositifs de réseau de l'opérateur de réseau lors de l'utilisation du réseau de radiotéléphonie mobile au moyen du MT (1) équipé d'une carte SIM activée,
b) signalement du MT (1) infecté à au moins un dispositif de réseau (3) ad hoc de l'opérateur de réseau, en indiquant au moins l'IMEI du MT (1) affecté et un identifiant d'abonné associé à la carte SIM par le ADS,
c) génération d'une demande de blocage relative à l'IMEI du MT (1) infecté par au moins un dispositif de réseau (3) recevant le signalement du MT infecté,
d) création, par au moins un dispositif de réseau (4) ad hoc, d'une entrée de blocage de l'IMEI, c.-à-d. une entrée de blocage associée à l'IMEI du MT (1) infecté, dans au moins une base de données (6) qui doit obligatoirement être consultée par les dispositifs de réseau de l'opérateur de réseau pour utiliser le réseau de radiotéléphonie mobile en vue de la transmission de données,
e) mise à zéro du volume de données disponible pour la carte SIM utilisée dans le MT (1) occupé par l'entrée de blocage de l'IMEI lors de la connexion du MT (1) transmettant son IMEI à un réseau de radiotéléphonie mobile,
f) interdiction de tout trafic de données lié à un volume de données disponible depuis et vers le MT (1) identifiable à l'aide de son IMEI bloqué pendant toute la durée de l'enregistrement du blocage de cet IMEI dans l'au moins une base de données (6) de l'opérateur de réseau.

2. Procédé selon la revendication 1, **caractérisé en ce que** l'utilisateur du MT (1) infecté par le logiciel malveillant est informé de l'infection détectée au moyen d'un SMS envoyé audit MT (1), à savoir au numéro de téléphone mobile associé à la carte SIM utilisée dans ce MT (1).

3. Procédé selon la revendication 2, **caractérisé en ce qu'**est transmis, avec le SMS concernant l'infection par un logiciel malveillant détectée, un lien qui, lorsqu'il est ouvert par l'utilisateur du MT (1) infecté, établit une connexion de données vers un site Internet utilisable même sans volume de données disponible, sur lequel l'utilisateur obtient des informations plus détaillées sur l'infection détectée sur son MT (1) et/ou sur les possibilités de la supprimer.

4. Procédé selon l'une des revendications 1 à 3, **caractérisé en ce que** le MT (1) soumis à un blocage de l'IMEI est redirigé, lorsqu'il tente d'établir une connexion de données, vers une page d'accueil de l'opérateur de réseau et/ou du fournisseur de radiotéléphonie mobile ayant émis la carte SIM utilisée avec le MT (1), qui est utilisable même sans volume de données disponible et sur laquelle l'utilisateur du MT (1) obtient des informations sur l'infection détectée sur son MT (1) et/ou sur les possibilités de la supprimer.

5. Système, à savoir réseau de radiotéléphonie mobile comprenant une pluralité de dispositifs de réseau, ceux-ci comprenant
- des dispositifs de réseau pour la connexion par radio de terminaux de radiotéléphonie mobile MT (1) au réseau de radiotéléphonie mobile,
- des dispositifs de réseau pour la transmission de données de communications vocales et d'autres données entre des terminaux de communication comprenant au moins un MT via le réseau de radiotéléphonie mobile, ainsi que pour le contrôle de ces processus de transmission,
- des dispositifs de réseau pour la gestion, à l'aide d'une base de données, des données contractuelles et des données d'utilisateurs,
- des dispositifs de réseau qui forment un sous-système de détection des abus ADS (2),
- des dispositifs des réseau conçus et configurés comme des dispositifs de lutte contre les abus (AME) pour traiter les signalements de cas d'abus détectés par l'ADS afin de prendre les mesures prévues à cet effet,
- dans lequel l'ADS (2) est conçu pour détecter une infection d'un MT (1) lors de l'utilisation du réseau de radiotéléphonie mobile avec ce MT (1) et pour envoyer à l'AME un signalement d'une infection détectée en indiquant l'IMEI du MT (1) affecté, et l'AME comprend
- au moins un dispositif de réseau (3) conçu et configuré pour recevoir des signalements des MT (1) infectés provenant de l'ADS (2) et pour générer et envoyer, pour chaque MT (1) affecté par une infection qui lui est signalé, une demande de blocage relative à l'IMEI dudit MT,
- au moins un dispositif de réseau (4) conçu et configuré pour générer, après réception d'une demande de blocage relative à un IMEI, une entrée de blocage de l'IMEI dans au moins une base de données (6) qui doit obligatoirement être consultée par les dispositifs de réseau de l'opérateur de réseau pour l'utilisation du réseau de radiotéléphonie mobile en vue de la transmission de données,
- au moins un dispositif de réseau (5) conçu et configuré pour mettre à zéro le volume de données disponible pour un MT (1) occupé par une entrée de blocage de l'IMEI dans l'au moins une base de données (6) de l'opérateur réseau lors de sa connexion à un réseau de radiotéléphonie mobile et empêcher ainsi tout trafic de données lié à un volume de données disponible depuis et vers ledit MT (1).
